# EUROPEAN PATENT APPLICATION

(11) **EP 4 000 775 A1**
(43) Date of publication of application: **25.05.2022**
(21) Application number: 21209516.0
(22) Date of filing: 22.11.2021
(51) Int. Cl.: B22F 10/28, B22F 10/366, B22F 12/45, B33Y 50/02

(54) **METHODS AND APPARATUS TO OPTIMIZE STITCH QUALITY IN ADDITIVE MANUFACTURING**

(30) Priority: 23.11.2020 US 202063117268 P
(71) Applicant: General Electric Company, Schenectady, NY 12345 (US); GE Avio S.r.l., 10040 Rivalta di Torino (TO) (IT)
(72) Inventor: Umang, Nitish, Schenectady, 12345 (US); Graham, Michael E., Schenectady, 12345 (US); Dodds, Nicholas, Niskayuna, 12345 (US); Buckley, Donovan, Schenectady, 12345 (US)
(74) Representative: Hafner & Kohl PartmbB

(57) **Abstract**

Methods and apparatus to optimize stitch quality in additive manufacturing are disclosed. An example apparatus includes at least one memory to store instructions, and processor circuitry to execute the instructions identify at least one keep-out zone (310) of an object (210) build area in which stitching is to be reduced during additive manufacturing, determine a first set of stitch coordinates (302, 303) corresponding to a stitching region (215) of the object (210), the stitching region (215) including a stitch boundary of the stitching region (215), and generate a second set of stitch coordinates (302, 303) reducing stitching in the at least one keep-out zone (310) of the object (210) build area, the second set of stitch coordinates (302, 303) determined using at least one of (1) a local search algorithm or (2) a random coordinate modification algorithm, the second set of stitch coordinates (302, 303) to reduce stitch length or support load balancing.

## Description

### RELATED APPLICATION

This disclosure claims the benefit of U.S. Provisional Patent Application No. 63/117,268, filed November 23, 2020, entitled "Methods and Apparatus to Optimize Stitch Quality in Additive Manufacturing". The entire disclosure of U.S. Provisional Patent Application No. 63/117,268 is hereby incorporated by reference in its entirety.

### FIELD OF THE DISCLOSURE

This disclosure relates generally to additive manufacturing and, more particularly, to methods and apparatus to optimize stitch quality in additive manufacturing.

### BACKGROUND

Additive manufacturing technologies (e.g., three-dimensional (3D) printing) permit formation of three-dimensional parts from computer-aided design (CAD) models. For example, a 3D printed part can be formed layer-by-layer by adding material in successive steps until a physical part is formed. Numerous industries (e.g., engineering, aviation, manufacturing, healthcare, etc.) have adopted additive manufacturing technologies to produce a variety of products, ranging from custom medical devices to aviation parts.

### BRIEF DESCRIPTION OF THE DRAWINGS

FIG. 1A illustrates example irradiation devices used to create or interact to create a region of an object during an additive manufacturing process.
FIG. 1B illustrates an example stitching region in an object built using the two or more irradiation devices of FIG. 1A.
FIG. 2A illustrates a schematic view of a first and second layer of an object including stitching regions where the first and second layers of the object are interconnected.
FIG. 2B illustrates a schematic view of a selected region of a single layer of a multi-layered object formed using additive manufacturing, including a stitching zone between two overlapping layers.
FIG. 3 illustrates an example first original stitch that intersects areas of a part of the multi-layered object and/or a designated keep-out zone and an example first optimized stitch formed in accordance with the methods and apparatus disclosed herein to avoid the part and/or designated keep-out zones.
FIG. 4 illustrates an example second original stitch that intersects areas of a part of the multi-layered object and/or a designated keep-out zone and an example second optimized stitch with multiple points formed in accordance with the methods and apparatus disclosed herein to allow increased flexibility in maneuvering around the part and/or a keep-out zone.
FIG. 5 illustrates an example third original stitch that intersects areas of a part of the multi-layered object and/or a designated keep-out zone and an example third optimized stitch formed in accordance with the methods and apparatus disclosed herein to allow for avoidance of the keep-out zones while maintaining static load balancing.
FIG. 6 illustrates example dynamic load balancing and stitch length optimization performed in accordance with the methods and apparatus disclosed herein based on an example overlap area between scan field layouts of two optical systems.
FIG. 7 illustrates example dynamic load balancing using scan field regions indicating centers of optical regions accessible by the two or more irradiation devices of FIG. 1, with stitching occurring in overlap areas where the scan field regions of the irradiation devices overlap.
FIG. 8 is a block diagram of an example implementation of an example stitch determiner that can be implemented as part of optimizing stitching during the example additive manufacturing processes of FIGS. 1-2.
FIG. 9 illustrates a flowchart representative of example machine readable instructions which may be executed to implement the example stitch determiner of FIG. 8.
FIG. 10 illustrates a flowchart representative of example machine readable instructions which may be executed to optimize a stitch boundary using the example stitch determiner of FIG. 8.
FIG. 11 is a block diagram of an example processing platform structured to execute the instructions of FIGS. 9-10 to implement the example stitch determiner of FIG. 8.
FIG. 12 is a block diagram of an example implementation of the processor circuitry of FIG. 11.
FIG. 13 is a block diagram of another example implementation of the processor circuitry of FIG. 11.
FIG. 14 is a block diagram of an example software distribution platform (e.g., one or more servers) to distribute software (e.g., software corresponding to the example machine readable instructions of FIGS. 9-10) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

The figures are not to scale. In general, the same reference numbers will be used throughout the drawing(s) and accompanying written description to refer to the same or like parts. Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein, "approximately" and "about" refer to dimensions that may not be exact due to manufacturing tolerances and/or other real-world imperfections. As used herein "substantially real time" refers to occurrence in a near instantaneous manner, recognizing there may be real world delays for computing time, transmission, etc. Thus, unless otherwise specified, "substantially real time" refers to real time +/- 1 second. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events. As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

### DETAILED DESCRIPTION

In the following detailed description, reference is made to the accompanying drawings that form a part hereof, and in which is shown by way of illustration specific examples that may be practiced. These examples are described in sufficient detail to enable one skilled in the art to practice the subject matter, and it is to be understood that other examples may be utilized. The following detailed description is therefore, provided to describe an exemplary implementation and not to be taken limiting on the scope of the subject matter described in this disclosure. Certain features from different aspects of the following description may be combined to form yet new aspects of the subject matter discussed below.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

As used herein, the terms "system," "unit," "module," "component," etc., may include a hardware and/or software system that operates to perform one or more functions. For example, a module, unit, or system may include a computer processor, controller, and/or other logic-based device that performs operations based on instructions stored on a tangible and non-transitory computer readable storage medium, such as a computer memory. Alternatively, a module, unit, or system may include a hard-wires device that performs operations based on hard-wired logic of the device. Various modules, units, component, and/or systems shown in the attached figures may represent the hardware that operates based on software or hardwired instructions, the software that directs hardware to perform the operations, or a combination thereof.

Additive manufacturing (AM), also known as 3D-printing, permits the formation of physical objects from three-dimensional (3D) model data using layer-by-layer material addition. For example, consumer and industrial-type 3D printers can be used for fabrication of 3D objects, with the goal of replicating a structure generated using computer-aided design (CAD) software. Complex 3D geometries including high-resolution internal features can be printed without the use of tooling, with sections of the geometries varied based on the type of material selected for forming the structure. However, 3D printing requires the assessment of printing parameters, such as 3D printer-specific settings, to determine which parameters result in the highest quality build (e.g., limiting presence of defects and/or deviations from the original CAD-based model). Such a process is especially critical when 3D printed parts and/or objects are used in products intended for human use (e.g., aviation, medicine, etc.), as opposed to just prototyping needs. An existing challenge with current AM techniques is that build strategies that direct how an AM system creates a region of an object within each layer are not readily modifiable. For example, multiple irradiation device AM systems have two or more irradiation devices (e.g., lasers) that create a region of interest during a build. However, how the irradiation devices create and/or interact to create the region of interest is not easily modifiable. For example, when two or more irradiation devices are used during additive manufacturing, the area where the scan vector paths of the two or more irradiation devices intersects and/or where the vector paths are in close proximity defines the stitching region. Such a region can be rougher when compared to a region formed using a single irradiation device. The region where the two or more areas formed using various irradiation devices intersect can represent a stitching line and/or a stitching boundary. The location of a stitching region in an object in which two or more irradiation devices interact to build the object may not be easily modifiable. For example, stitch boundary lines can be placed (e.g., during CAD-based model development) in fixed and/or proximate locations that extend through the printed parts (e.g., such that the stitching line at one layer of a build is within some distance of a stitching line on a layer positioned below). However, this can be a time-consuming and labor-intensive process involving the laying out and/or identification of such stitch boundaries by hand. Such a process presents a risk of human error as judgement is required to create an optimal stitching path with respect to laser capability, part features, machine constraints, and/or required material properties. Difficulty is compounded as the stitch is to be created using a moving gantry which creates only a limited window of opportunity for the lasers to scan their respective sides of the stitch. Accordingly, methods and apparatus that permit an optimization-based technique to control the stitch boundary quality in multi-laser additive machines would be welcomed in the technology.

AM-based processes are diverse and include powder bed fusion, material extrusion, and material jetting. For example, powder bed fusion uses either a laser or an electron beam to melt and fuse the material together to form a 3D structure. Powder bed fusion can include multi jet fusion (MJF), direct metal laser sintering (DMLS), direct metal laser melting (DMLM), electron beam melting (EBM), selective laser sintering (SLS), among others. For example, DMLM uses lasers to melt ultra-thin layers of metal powder to create the 3D object, with the object built directly from a CAD file (e.g., .STL file) generated using CAD data. Using a laser to selectively melt thin layers of metal particles permits objects to exhibit homogenous characteristics with fine details. A variety of materials can be used to form 3D objects using additive manufacturing, depending on the intended final application (e.g., prototyping, medical devices, aviation parts, etc.). For example, the DMLM process can include the use of titanium, stainless steel, superalloys, and aluminum, among others. For example, titanium can withstand high pressures and temperatures, superalloys (e.g., cobalt chrome) can be more appropriate for applications in jet engines (e.g., turbine and engine parts) and the chemical industry, while 3D printed parts formed from aluminum can be used in automotive and thermal applications.

Powder bed fusion techniques such as DMLM use a fabrication process that is determined by a range of controlled and uncontrolled process parameters. For example, laser control parameters (e.g., position, velocity, power) as well as powder layer parameters (e.g., material, density, layer height) should be well-defined and include specific combinations to permit adequate melting of adjacent laser scan tracks and/or the underlying substrate (e.g., previously melted layers). In metal powder additive manufacturing, metal powder layers are sequentially melted together to form the object. For example, fine metal powder layers are melted after being uniformly distributed using an applicator on a metal powder bed. The metal powder bed can be moved in a vertical axis. Once each layer is created, each two-dimensional slice of the object geometry can be fused by selectively melting the metal powder. Multiple irradiation devices (e.g., laser beams, electron beams, etc.) can be used during the build process for faster formation of larger objects, use of larger build areas, and/or improvement of the build accuracy. When two or more irradiation devices interact to build an object, stitching regions can be formed in regions where multiple irradiation devices are used to form a part, thereby resulting in an overlap. However, stitching regions can have an increased surface roughness or altered material properties that may not be desirable in sensitive areas in certain objects (e.g., within a hole that requires precise dimensions or a smooth bearing surface, etc.). To build an object one layer at a time, an object can be divided into cross sections and multiple irradiation devices (e.g., lasers) can be utilized at the same time. It is desirable to distribute the workload between the two or more lasers while also minimizing any stitching effects (e.g., minimizing a length of the stitch that is passing through a part).

Examples disclosed herein describe methods and apparatus for optimizing and/or otherwise improving stitch quality in additive manufacturing applications. The methods and apparatus disclosed herein permit implementation of an optimization-based technique to control the stitch boundary quality in multi-laser additive machines (e.g., large-scale format additive machines). For example, the stitch boundary quality can be defined in terms of stitch length and avoidance of certain no-go zones (e.g., keep out zones related to high stress, smoke occlusion, etc.). For example, the methods and apparatus disclosed herein permit development of a multi-segment stitch boundary that drives the stitch out of a given part area and ensures non-overlap with keep-out zones. As such, large parts requiring multiple irradiation devices (e.g., lasers, fixed and/or moving configurations, etc.) can be printed while controlling the location of any stitching artifacts. Additionally, superior part quality can be achieved by reducing or minimizing the stitch length while avoiding no-go zones (e.g., part areas and/or keep-out zones), thereby reducing weak links in the build part. Furthermore, such a solution provides high flexibility to easily add more constraints, objections and/or modify parameters based on specific user needs. In the examples disclosed herein, load balancing of the laser workload permits increased or otherwise improved throughput for builds of 3D objects requiring multiple lasers working in parallel. In the examples disclosed herein, an algorithm is developed that can be implemented to evaluate a given stitch line with respect to load balancing, stitch length and/or avoidance of keep-out zones. In the examples disclosed herein, such an algorithm can further be used to performs a search for a better solution (e.g., optimized stitch boundary) in the neighborhood of the existing stitch, where the neighborhood can correspond to modification of x- and y-coordinates of a set of points along the stitch boundary based on a local search, the local search a function of part geometry and stitching region parameters.

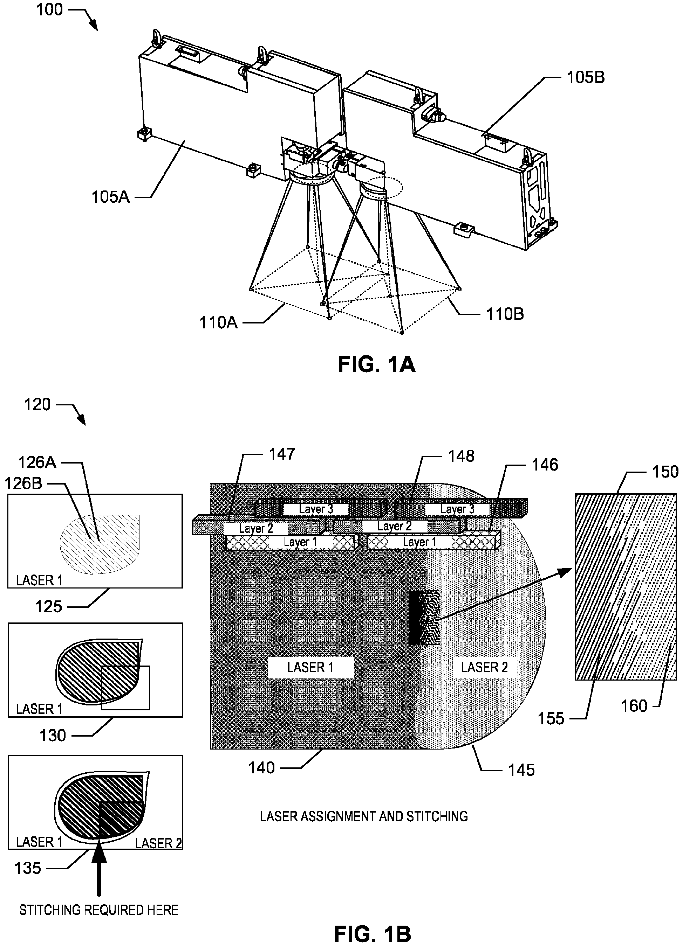

FIG. 1A illustrates an example implementation 100 of example irradiation devices 105A, 105B used to create or interact to create a region of an object during an additive manufacturing process. The irradiation devices 105A, 105B can be used to selectively melt metal powder layer(s) to fuse two dimensional slices of an object geometry (e.g., based on an object generated using a CAD-based program). The irradiation device(s) 105A, 105B can include high-powered irradiation beam(s) 110A, 110B (e.g., a 100 Watt ytterbium laser, etc.) to fully weld (e.g., melt) the metal powder to form a solid metal. In some examples, the irradiation beam(s) 110A, 110B move in the X-Y direction, and have an intensity sufficient to fully weld (e.g., melt) the metal powder to form the solid metal. During the 3-D building process, the metal powder bed can be lowered for each subsequent two-dimensional layer, with the process repeated until the object is completely formed. In the example of FIG. 1, the two or more irradiation device(s) 105A, 105B (e.g., high powered lasers, electron beams, etc.) can work together to form an object, with the use of multiple irradiation devices 105A, 105B permitting faster formation of larger objects, use of larger build areas, and/or improvement of the build accuracy. In some examples, a two-dimensional image of each build layer can include assignments for different irradiation devices 105A, 105B to form different regions of the object. For example, the irradiation device assignment can be provided by an AM file system (e.g., CAD-based system used to create the original layout of an object, etc.). As such, various parameters can control one or more aspect(s) of how a particular printing device operates. Such parameters relating to the irradiation device(s) 105A, 105B can include irradiation beam width, speed, and/or power, as well as irradiation device assignment. Other parameters relevant to how a particular printing device operates can include processing chamber temperature and/or pressure, scan vector spacing, length, and/or stop/start positions, scan vector end gap spacing and/or positioning, as well as the stitching region position, size, and/or shape/path. While this disclosure describes the use of two irradiation devices 105A, 105B, any number of irradiation devices can be used, and the irradiation device 105A, 105B can include any device (e.g., electron beam) and is not limited to a laser and can be applicable in any additive manufacturing technique (e.g., binder dispenser, object material dispenser, curing laser, etc.).

During operation, the irradiation device(s) 105A, 105B can be guided (e.g., by scanner mirrors for lasers or electromagnetic field/electric coils for electron beams, etc.) along scan vectors (e.g., paths). In some examples, internal scan vectors melt inner regions of an object as they scan linearly across a layer, while a thin border can be melted with one or three contour scan vectors that follow a desired outer edge of a layer. In some examples, a system with multiple lasers can include irradiation device 105A, 105B assignments. For example, as each scan vector of a laser travel along the surface of a given layer, a melt pool is created, wherein the melt pool stops where the scan vector stops. As such, in some examples each irradiation device 105A, 105B has its laser or electron beam positioned relative to the build platform. In some examples, stitching regions can be created as described in connection with FIG. 1B.

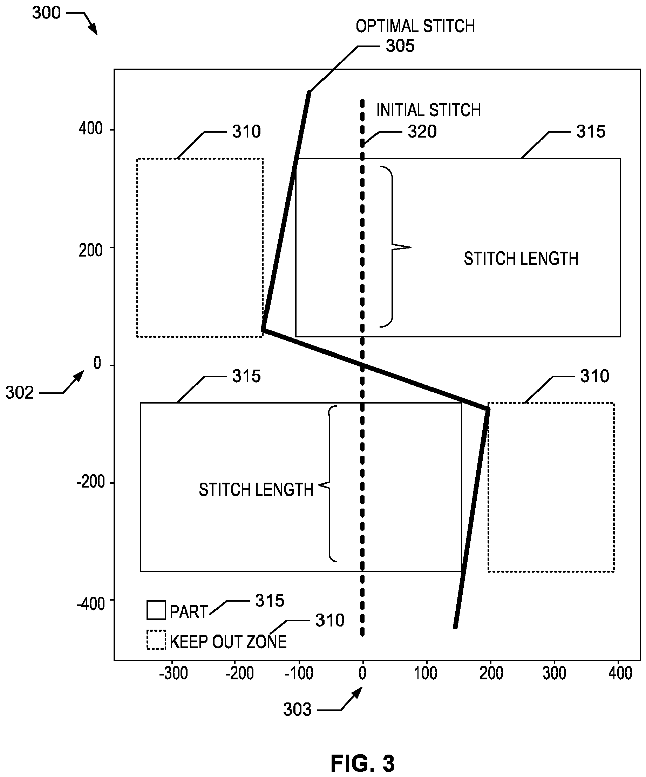

FIG. 1B illustrates an example stitching region 120 in an object built using the two or more irradiation devices 105A, 105B of FIG. 1. For example, a portion of an object (e.g., a layer, a slice, etc.) is shown in the example object region(s) 125, 130, 135 (e.g., a two-dimensional area of the object layer). In the example of object region 125, an irradiation device 105A or 105B (e.g., laser 1) can be assigned to form the entire layer of the object region 125, the irradiation device 105A or 105B including a scan vector spacing (e.g., space between adjacent scan vector(s) 126A, 126B). In the example of FIG. 1B, irradiation device 105A can continue to be used to build up the first layer, resulting in a thicker object region 130. In some examples, the pre-assignment irradiation device 105A can be changed to another irradiation device (e.g., irradiation device 105B to cover a region of the object). For example, the object region 135 can be built using two irradiation devices 105A and 105B (e.g., internal scan vectors re-assigned to be built by laser 2). As such, stitching can be required where the two areas built by the separate irradiation devices 105A, 105B (e.g., using beams 110A, 110B) intersect and/or overlap. As such, when a first laser and a second laser are used to form an object region (e.g., example region 140 formed using irradiation device 105A, example region 145 formed using irradiation device 105B). The resulting combination of using the two lasers to form the object creates an example stitching region 150, where example scan vectors 155 of the region 140 and example scan vectors 160 of the region 145 are used to form a part of the object. In the example of FIG. 1B, stitching scan paths can occur across multiple lasers and/or object layers. For example, stitching can occur across multiple layers, such as example layers 146, 147, 148. The location of a stitching region in an object in which two or more irradiation devices (e.g., laser 1 and laser 2) interact to build the object may not be easily modifiable. Additionally, it is desirable to distribute the workload between the two or more lasers while also minimizing or otherwise reducing any stitching effects (e.g., minimizing or otherwise reducing a length of the stitch that is passing through a part). As described in connection with FIGS. 3-7, the stitching can be optimized and/or otherwise improved using the methods and apparatus disclosed herein, thereby controlling the stitch boundary quality in multi-laser additive machines.

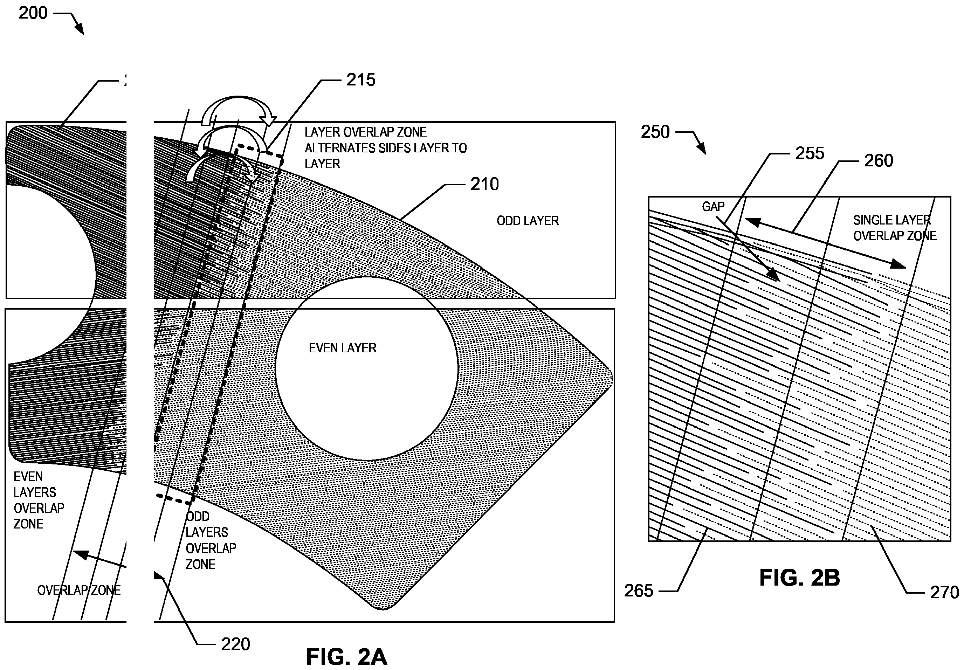

FIG. 2A illustrates a schematic view of a first and second layer 205, 210 of an example object 200 including a stitching region 215 where the first and second layers of the object are interconnected. In the example of FIG. 2A, each irradiation device 105A, 105B can include a non-overlapping field region in which it can exclusively melt metal powder, as well as at least one overlapping field region or stitching region in which two or more irradiation devices 105A, 105B can melt the metal powder. As such, irradiation device(s) 105A, 105B generate irradiation beam(s) 110A, 110B that fuse the metal particles (e.g., stainless steel, cobalt chromium molybdenum alloy, etc.). As shown in the example of FIG. 2A, in some areas there can be multiple stitching regions (e.g., example overlap zones 220 with use of multiple lasers to build a part). In FIG. 2A, the stitching region 215 is located in a first layer 205, while another stitching region can be located in a different layer of the object 200 (e.g., an odd layer or an even layer). As such, in some examples, a first stitching region in a first layer may not overall with a second stitching region in a second, different layer. For example, a portion of a first layer of an object 200 (e.g., odd layer or odd-numbered layers) can be superimposed next to a portion of a second, adjacent layer of object (e.g., even layer or even-numbered layers), such that a region can encompass stitching regions (e.g., such as stitching region 215) that extend vertically across a plurality of layers of the object 200.

FIG. 2B illustrates an enlarged schematic view of a selected region 250of a single layer of a multi-layered object formed using additive manufacturing, including a stitching zone 260 between two overlapping layers (e.g., overlapping even layers, overlapping odd layers, etc.). In the example of FIG. 2B, the overlapping layers form a single layer overlap zone 260 defined by example scan vectors 265, 270 and example scan vector end gap 255 spacing. Printing devices can have varying scan vector end gap spacings and/or positioning, including varying stitching region position(s), size(s), and/or shape(s)/path(s). Scan vectors 265, 270 can define the scan vector end gap 255 (e.g., in a space between melt pool ends of the scan vectors), such that the scan vector end gap 255 can be defined between a first melt pool end of a first irradiation device 105A and a second, abutting melt pool end of a second, different irradiation device (e.g., irradiation device 105B). Controlling the stitching boundaries and/or formations can help with manufacturing parts that are consistent with CAD-based design requirements and permit accurate reproduction of parts while minimizing stitching effects (e.g., minimizing or otherwise reducing surface roughness or altered material properties that may not be desirable to be located in sensitive areas in certain objects), as described in connection with FIGS. 3-7.

FIG. 3 illustrates an example stitching region 300 with an example first initial stitch 320 that intersects areas of an example part 315 of the multi-layered object and/or an example designated keep-out zone 310 and an example first optimized stitch 305 formed in accordance with the methods and apparatus disclosed herein to avoid the part 315 and/or designated keep-out zone(s) 310. In the example of FIG. 3, example vertical and/or horizontal coordinates 302, 303 are shown corresponding to the positioning of a laser beam 110A, 110B during fabrication of a given object. The initial stitch 320 is shown to intersect areas that include the part 315 of the build and/or the keep-out zone(s) 310. A stitch boundary quality can be defined in terms of stitch length and/or avoidance of certain no-go zones (e.g., keep out zones related to high stress, smoke occlusion, etc.). In the example of FIG. 3, a multi-segment stitch boundary (e.g., optimal stitch 305) that drives the stitch out of a given part area (e.g., part 315) and ensures non-overlap with keep-out zones 310 can be used to improve the stitch boundary quality. For example, the length of stitch (e.g., optimal stitch 305) passing through the part 315 is reduced to zero length, while avoiding the keep-out zones 310.

Additionally, load balancing (e.g., load balancing the laser workload to increase throughput) is accomplished, given that the build area on the right side of the stitch (e.g., part 315) is the same as the build area on the left side of the stitch (e.g., part 315). To determine the parameters of the optimized stitch (e.g., x- and y-coordinates used to form the stitch 305), an algorithm can be used to perform a search for a better solution (e.g., optimized stitch boundary) in the neighborhood of the existing stitch. For example, the neighborhood can correspond to a modification of x- and y- coordinates of a set of points along the stitch boundary based on a local search, the local search a function of part geometry and stitching region parameters. Such an example algorithm (e.g., pseudo code) can include:

| | | | |
|---|---|---|---|
| 1 | input = set of points on initial stitch line | | |
| 2 | currentBestStitch <- initialStitch | | |
| 3 | currentBestStitchValue <- EvaluateSolution(currentBestStitch) | | |
| 4 | while stopping criterion (# iterations or time limit etc.) is not met: | | |
| 5 | | newStitch <- LocalSearch(currentBestStitch) | |
| 6 | | newStitchValue <- EvaluateSolution(newStitch) | |
| 7 | | if newStitchValue is better than currentBestStitchValue then | |
| 8 | | | currentBestStitch <- newStitch |
| 9 | | | currentBestStitchnValue <- newStitchValue |
| 10 | | end if | |
| 11 | | if solution value does not improve over (elapsedTime = timeRandomRestart) or with respect to number of iterations, then reinitialize initialStitch and start over | |
| 12 | | end if | |
| 13 | end while | | |

In the example pseudocode presented above, *EvaluateSolution()* (e.g., shown in example code lines 3 and 6) is a function that evaluates a given stitch line with respect to load balancing, stitch length, avoidance of keep-out zones etc. The example function *LocalSearch()* (e.g., shown in example code line 5) performs a search for a better solution (stitch) in the neighborhood of the existing stitch (e.g., modifying x- and y- coordinates of a set of points along the stitch boundary based on the local search, the local search a function of part geometry and stitching region parameters). As shown in example code line 11, if a solution values does not improve over a given amount of time, the initial stitch can be reinitialized. The algorithm disclosed herein can be developed and/or implemented using any programming language (e.g., Python programming language, etc.). In some examples, the set of points of an initial stitch line can include a set of points that are identified based on the initial stitch 320 (e.g., x- and y-coordinates). In some examples, an iteration of potential coordinates identifying regions around the initial stitch area determine whether a particular iteration matches a location that reduces incursion of the stitch onto a keep-out zone (e.g., keep-out zone 310). If coordinates that correspond to a reduced incursion on the keep-out zones are not identified after a set number of iterations and/or a set amount of time, the algorithm can be reinitialized until coordinates matching the optimal stitch 305 (e.g., a stitch avoiding the keep out zones and/or the part zones) are identified. While in some examples the coordinates are identified using a local search algorithm, the coordinates can also be identified using a random coordinate modification algorithm along the stich boundary. In some examples, the neighborhood structure of the local search algorithm can depend on the part geometry and/or the stitching region (e.g., the region of overlap between laser systems where stitching is feasible). In some examples, there are degrees of freedom (e.g., parameters) related to the number of points along the stitch that can be modified and/or the amount of modification to be performed in a single iteration for a given set of stitch coordinates (e.g., x- and y-coordinates). In some examples, such parameters need not be fixed but can change as a function of the number of algorithm iterations and/or time elapsed during the algorithm runtime. Furthermore, any other type of local search algorithm can be used to implement the modification of x- and y-coordinates. In some examples, the algorithm can include local gradients to cover random and/or directed searches for improved stitch line(s) with respect to load balancing, stitch length, and/or avoidance of keep-out zones.

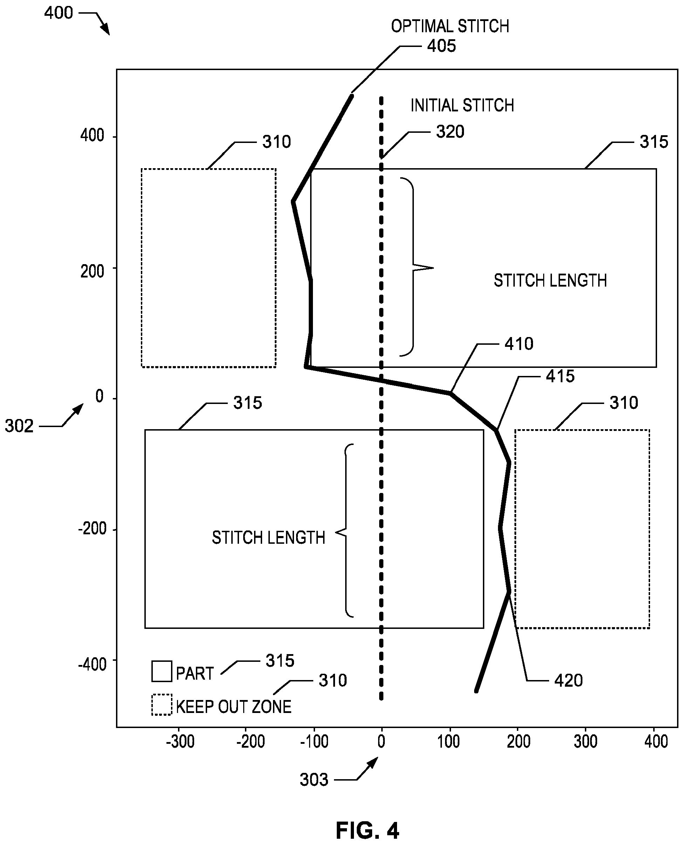

FIG. 4 illustrates an example stitching region 400 with an example first initial stitch 320 that intersects areas of the part 315 of the multi-layered object and/or a designated keep-out zone 310 and an example second optimized stitch 405 with multiple points formed in accordance with the methods and apparatus disclosed herein to allow increased flexibility in maneuvering around the part 315 and/or a keep-out zone 310. The optimal stitch 405 can have any number of points (e.g., as visible in the optimal stitch black polyline with example points 410, 415, 420) to allow flexibility to move around no-go zones (e.g., part 315 and/or keep-out zone 310). As such, the stitching can be optimized and/or otherwise improved based on the object being printed and/or the level of accuracy involved in part reproduction. In some examples, factors such as the area of the stitch, material properties, printer configuration, irradiation device selection can also determine the total points (e.g., 410, 415, 420) and/or stitch line geometries. Additionally, load balancing is accomplished because the build area on the right side of the stitch (e.g., part 315) is the same as the build area on the left side of the stitch (e.g., part 315).

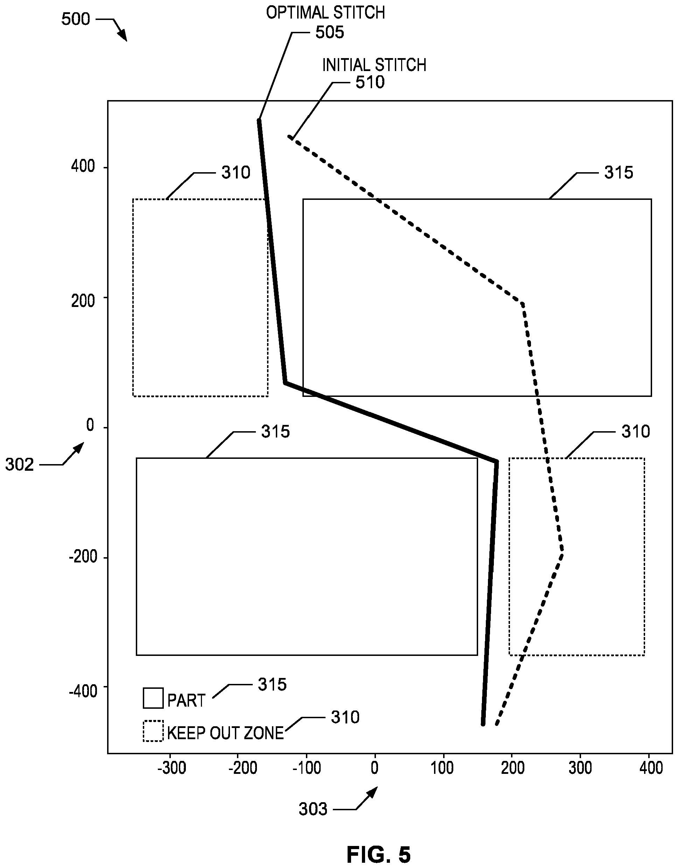

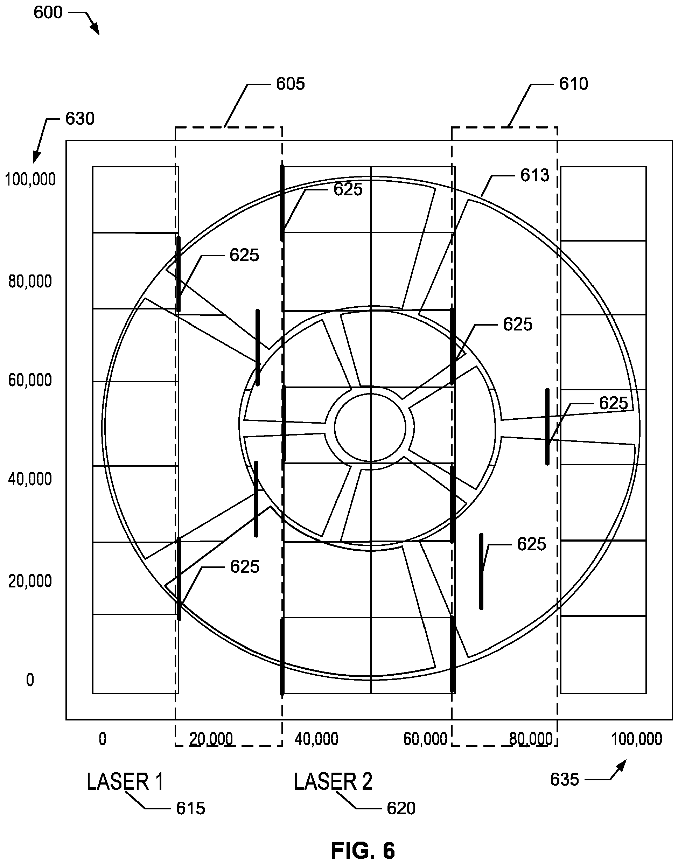

FIG. 5 illustrates an example stitching region 500 with an example second initial stitch 510 that intersects areas of a part 315 of the multi-layered object and/or a designated keep-out zone 310 and an example third optimized stitch 505 formed in accordance with the methods and apparatus disclosed herein to allow for avoidance of the keep-out zones 310 while maintaining static load balancing. As previously discussed in connection with FIGS. 3 and 4, the optimized stitch 505 is formed such that it is driven out of the keep-out zone(s) 310 and/or avoids the part areas of the build. Likewise, until the second initial stitch 510, the optimized stitch 505 further permits load balancing, such that one of the lasers does not perform more work than another laser, thereby permitting a more efficient build process that balances the laser workload (e.g., improving build speed). As described in connection with FIG. 3, a local search-based optimization algorithm is used to determine an optical stitch boundary. In some examples, if the initial stitch 510 includes a total of three segments, four coordinates can be defined (e.g., using the x- and y-axes 302, 303) along the stitch, and the coordinates can be randomized along the stitch to identify the optimal set of coordinates (e.g., resulting in reduced length of the stitch, load balancing, avoidance of keep-out zones, etc.). In some examples, a user can select a trade-off between load balancing and reducing/minimizing stitch length (e.g., based on user preferences, anticipated effects to the final build, etc.). In some examples, avoidance of keep-out zones (e.g., thermal, mechanical stress, smoke occlusion, etc.) can be a primary concern for a user based on a specific object being built. As described herein, a multi-segment stitch boundary can be determined to ensure increased flexibility when performing stitching during the fabrication of a three-dimensional object. Additionally, the algorithm described herein can be used for static and/or dynamic stitching optimizations (e.g., in real-time during actual build process). As shown in connection with FIGS. 3-5, static load balancing can be accomplished by ensuring that the build area on the right side of the stitch is the same as the build area on the left side of the stitch. As described in connection with FIGS. 6-7, dynamic load balancing can also be accomplished using the methods and apparatus disclosed herein.

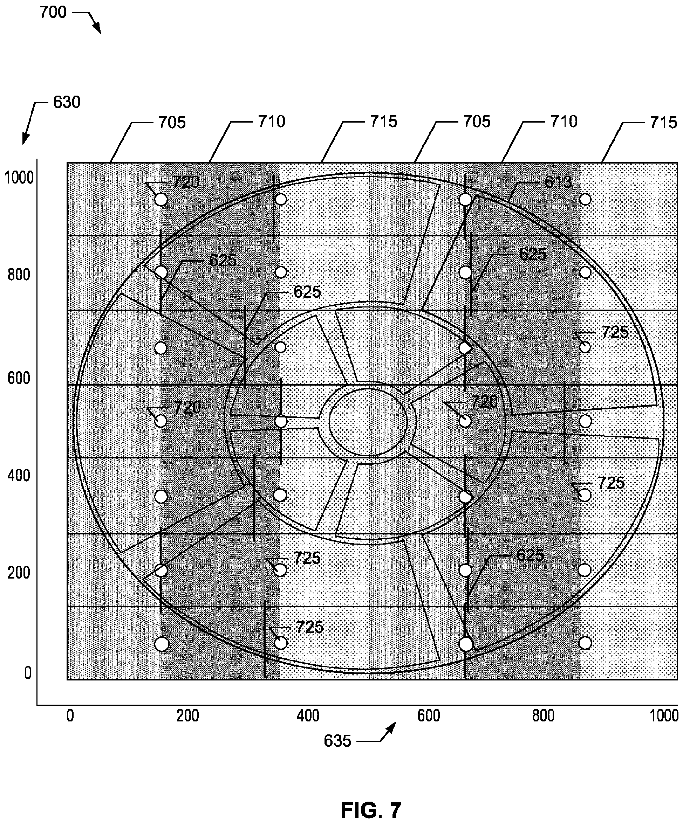

FIG. 6 illustrates example dynamic load balancing 600 and stitch length optimization performed in accordance with the methods and apparatus disclosed herein based on an example overlap area between scan field layouts of two optical systems (e.g., a first laser 615 and a second laser 620). While in the example of FIGS. 3-5 the stitch is more localized (e.g., shown on a smaller scale using coordinates 302, 303), in the example of FIGS. 6-7, the entire example object outline 613 can be shown using example coordinates 630, 635. In the example of FIG. 6, lasers and/or optical systems are loaded onto a moving gantry and the objective is to load balance and optimize stitch length (e.g., ensuring a vertical stitch) in each horizontal slice of the object. Example overlap areas 605, 610 are shown between scan field layouts of the two optical systems (e.g., irradiation devices 105A, 105B with lasers 615, 620). In some examples, example stitch boundary 625 should lie within the overlap region (e.g., overlap areas 605, 610), as described in more detail in connection with FIG. 7.

FIG. 7 illustrates example dynamic load balancing 700 using scan field regions indicating centers of optical regions accessible by the two or more irradiation devices of FIG. 1, with stitching occurring in example overlap area(s) 710 where the scan field regions of the irradiation devices overlap. In the example of FIG. 7, example center(s) 720, 725 of the focal correspond to areas where the laser (e.g., laser 615, 620) can point to the right or left of the areas, while the surrounding regions 705, 715 correspond to areas around the laser overlap. As such, the center(s) 720, 725 correspond to centers of the optical region that is accessible to a given laser (e.g., laser 615, 620), such that regions to the left of the center(s) 720, 725 (e.g., regions are worked on by one laser (e.g., laser 615) while regions to the right of the center(s) 720, 725 are worked on by another laser (e.g., laser 620). As such, the stitch lines that are formed lie within the overlap areas 710 (e.g., as shown using stitch boundaries 625). As such, the methods and apparatus disclosed herein permit dynamic load balancing by ensuring equal distribution of work between laser 615 and laser 620, as shown in the example of FIG. 7. While, in FIG. 7, two lasers are shown interacting to form an object (e.g., as defined by object outline 613), any number of lasers can be used (e.g., three lasers, four lasers, etc.).

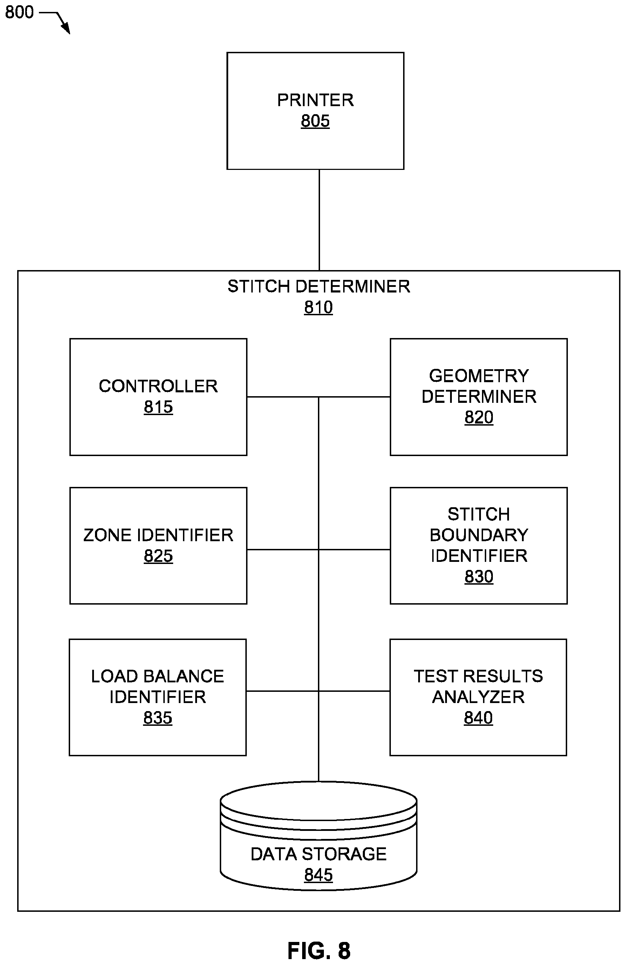

FIG. 8 is a block diagram 800 of an example implementation of an example stitch determiner 810 that can be implemented as part of optimizing stitching during the example additive manufacturing processes of FIGS. 1-2. The stitch determiner 810 of FIG. 8 includes an example controller 815, an example geometry determiner 820, an example zone identifier 825, an example stitch boundary identifier 830, an example load balance identifier 835, an example test results analyzer 840, and an example data storage 845. In the example of FIG. 8, the stitch determiner 810 interacts with the printing system (e.g., example printer 805). The printer 805 can be any type of printer used in an additive manufacturing process based on any type of additive manufacturing technique (e.g., direct metal laser melting (DMLM), electron beam melting (EBM), etc.) that relies on the use of any type of irradiation device (e.g., two or more lasers, electron beams, etc.).

The controller 815 can be used to control the additive manufacturing process as it relates to stitching optimization. For example, the controller 815 can be used to identify the region of interest for a particular build where stitching can occur (e.g., based on total number of lasers used, the regions where lasers overlap during the building process, etc.). In some examples, the controller determines when to initiate the geometry determiner 820, the zone identifier 825, the stitch boundary identifier 830, the load balance identifier 835, and/or the test results analyzer 840. In some examples, the controller 815 receives input from the printer 805 (e.g., printer configuration, irradiation device settings, user-provided settings, CAD-file specifications, etc.) and/or provides output to the printer 805 (e.g., laser reassignment, stitch boundary coordinates, etc.).

The geometry determiner 820 determines the geometry of a given build (e.g., extracts data from a CAD-based file to determine dimensions of an object to be additively manufactured). In some examples, the geometry determiner 820 identifies the coordinates at which a stitch boundary can occur based on laser assignments to specific regions of the build area. In some examples, the geometry determiner 820 identifies a total number of layers and/or total number of laser overlap regions. The geometry determiner 820 can further be used to determine a geometry of an initial stitch and/or an optimized stitch (e.g., total number of points 410, 415, 420, etc.). In some examples, the geometry determiner 820 determines the stitch geometry based on the location of the part(s) 315 and/or the keep-out zones 310.

The zone identifier 825 identifies the various zones that are to be avoided by an optimized stitch boundary. For example, the zone identifier 825 determines the location (e.g., x- and y-coordinates) of part areas (e.g., parts 315) and/or keep-out zone(s) 310 (e.g., related to high stress areas, smoke occlusions, etc.). In some examples, the zone identifier 825 identifies the keep-out zones 310 based on printer settings, material properties, part geometries, and/or any other variables that can affect the final build (e.g., areas sensitive to roughness, desired mechanical properties of the build, edges of the build, etc.). In some examples, the zone identifier 825 can determine the keep-out zones based on user preferences and/or inputs. In some examples, the zone identifier 825 can determine the keep-out zones 310 and/or areas of the part(s) 315 and store them in the data storage 845.

The stitch boundary identifier 830 determines a given stitch boundary relative to a region of the build (e.g., based on the anticipated overlap of laser work areas, etc.). In some examples, the stitch boundary identifier 830 determines a boundary of the stitch based on the overlapping scan vector paths of two or more lasers used during the fabrication of a three-dimensional object. In some examples, the stitch boundary identifier 830 uses the algorithm described in connection with FIG. 3 to identify specific coordinates of a stitch boundary based on an existing initial stitch and the preferred conditions that the stitch boundary should meet (e.g., reduced stitch length, etc.). In some examples, the stitch boundary identifier 830 monitors changes in the stitch boundaries during a build to determiner modifications to the stitch boundary in real-time and/or necessary adjustments that can be needed as a result of changes in layers (e.g., odd layers, even layers, etc.) used during the build.

The load balance identifier 835 determines whether a given stitch boundary supports load balancing (e.g., increasing build efficiency using a given number of lasers). For example, the load balance identifier 835 can be used to alter stitch boundaries based on a given laser assignment in order to permit lasers to build a part in unison without compromising on the time efficiency of the build (e.g., evenly dividing the workload among lasers). In some examples, the load balance identifier 835 determines the load balance based on the total size of the build, build object coordinates and/or dimensions, laser settings (e.g., power, speed, etc.), and/or part geometry. In some examples, the load balance identifier 835 can be used to monitor and/or correct load balance in real-time during ongoing fabrication of a three-dimensional object.

The test results analyzer 840 can be used to analyze initial stitches and compare them to optimized stitches to determine improvements in stitch boundaries (e.g., based on avoidance of keep-out zones 310, areas of a part 315, stitch length, etc.). In some examples, the test results analyzer 840 can be used to determine how a given stitch boundary affects the final build (e.g., mechanical properties, stress points, surface roughness, etc.). In some examples, the test results analyzer 840 can be used to optimize and/or otherwise improve certain features of the stitch boundary (e.g., length, etc.) based on the desired build outcome (e.g., as defined by a user, based on printer configuration, etc.). For example, if a stitch boundary does not meet all the desired features of an optimized stitch (e.g., minimum length, avoidance of keep-out zones, etc.), the test results analyzer 840 can be used to determine what kind of stitch boundary (e.g., coordinates, length, number of points, etc.) improves the desired outcome (e.g., speed of build, quality of build, etc.). For example, the test results analyzer 840 can be used to determine whether certain areas of a keep-out zone 310 can be breached as long as other user preferences are satisfied (e.g., load balancing, etc.).

The data storage 845 can be used to store any data relating to inputs provided by the printer 805, the stitch geometries determined by the geometry determiner 820, the zones (e.g., keep-out zones 310) identified by the zone identifier 825 (e.g., based on coordinates), the stitch boundaries determined by the stitch boundary identifier 830, the load balancing based on evaluation of laser workloads as determined using the load balance identifier 835, and/or the test results analyzer 840 data (e.g., optimum stitch lengths as compared to initial stitch lengths). The data storage 845 can be implemented by any storage device and/or storage disc for storing data such as, for example, flash memory, magnetic media, optical media, etc. Furthermore, the data stored in the data storage 845 can be in any data format such as, for example, binary data, comma delimited data, tab delimited data, structured query language (SQL) structures, etc. While in the illustrated example the data storage 845 is illustrated as a single database, the data storage 845 can be implemented by any number and/or type(s) of databases.

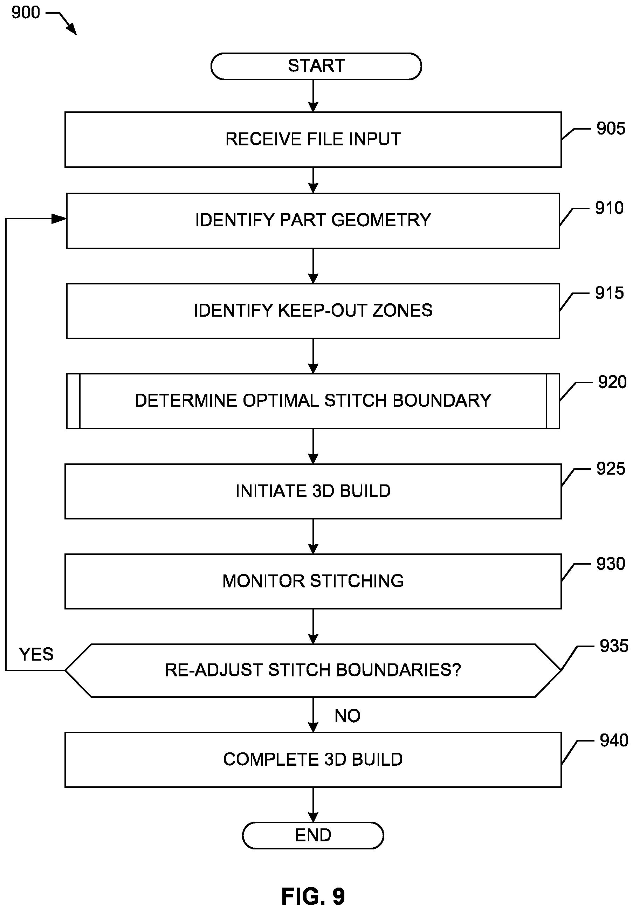

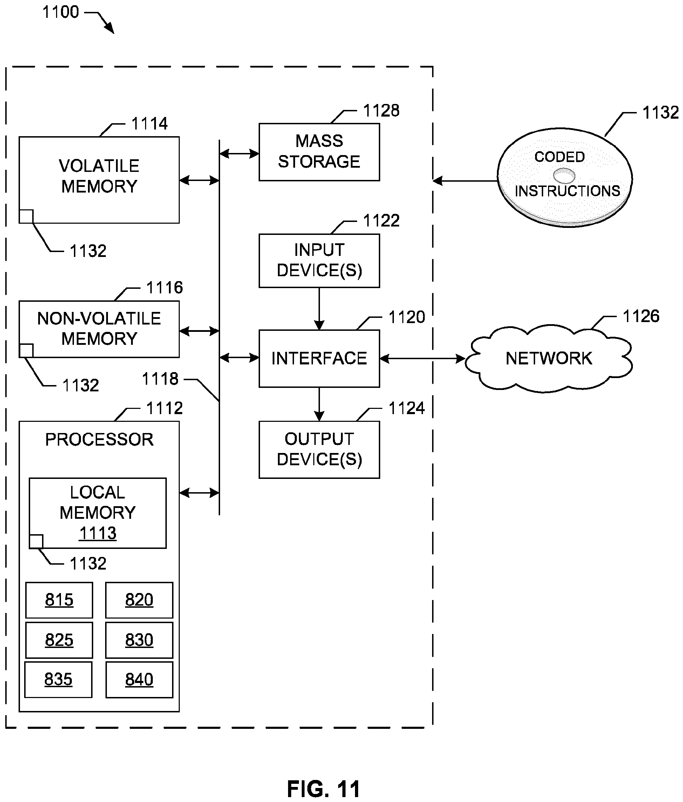

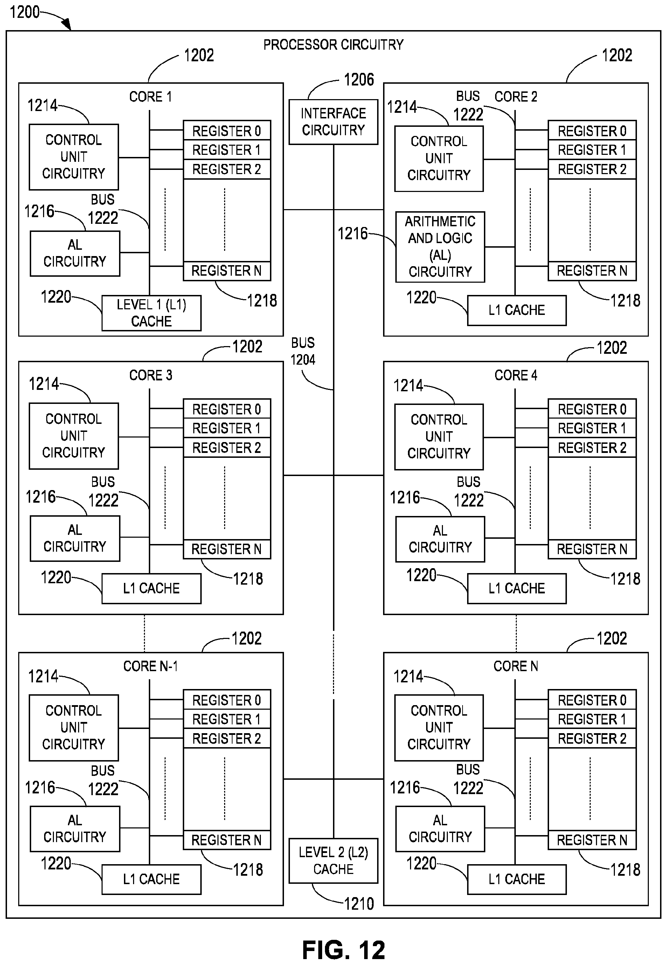

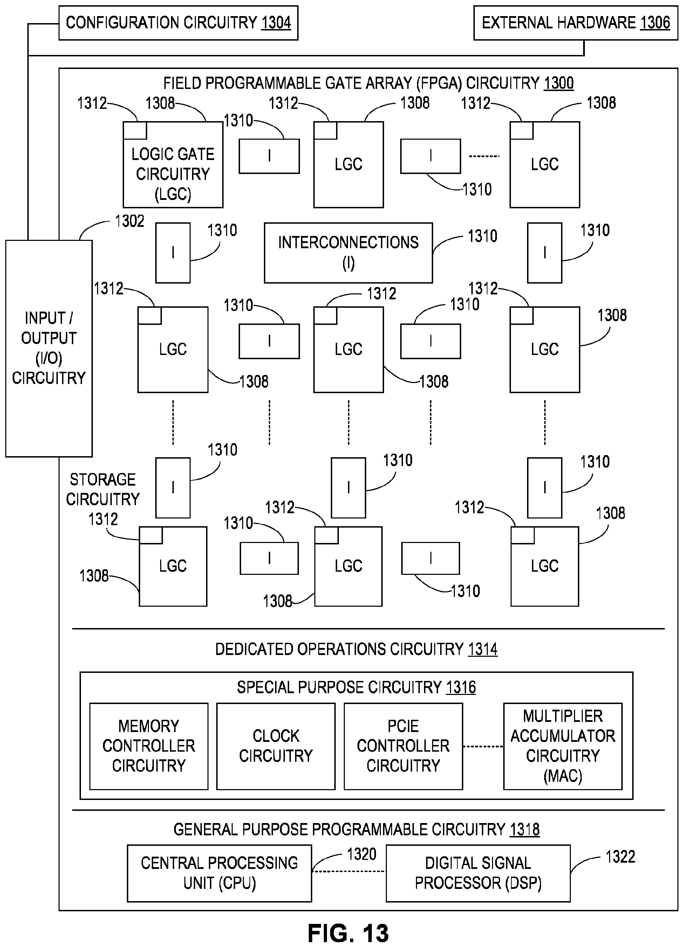

In some examples, the apparatus includes means for identifying at least one keep-out zone of an object build area in which stitching is to be reduced during additive manufacturing. For example, the means for identifying may be implemented by the zone identifier 825 of FIG. 8. In some examples, the zone identifier 825 may be implemented by machine executable instructions such as that implemented by at least block 915 of FIG. 9 executed by processor circuitry, which may be implemented by the example processor circuitry 1112 of FIG. 11, the example microprocessor 1200 of FIG. 12, and/or the example Field Programmable Gate Array (FPGA) circuitry 1300 of FIG. 13. In other examples, the zone identifier 825 is implemented by other hardware logic circuitry, hardware implemented state machines, and/or any other combination of hardware, software, and/or firmware. For example, the zone identifier 825 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

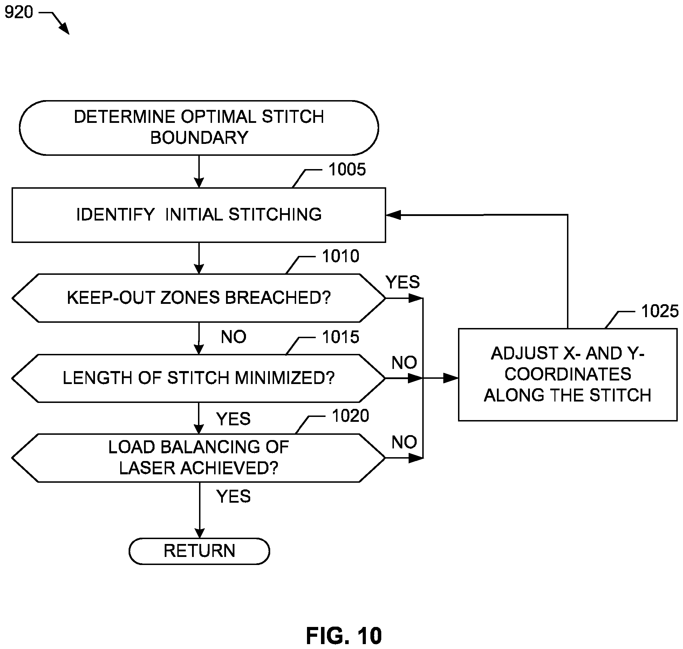

In some examples, the apparatus includes means for determining a set of coordinates to identify a first set of stitch coordinates corresponding to a stitching region of the object, the stitching region including a stitch boundary of the stitching region and identify a second set of stitch coordinates reducing stitching in the at least one keep-out zone of the object build area, the second set of stitch coordinates based on modification of x- and y-coordinates of a set of points along the stitch boundary based on a local search, the local search a function of part geometry and stitching region parameters . For example, the means for determining a set of coordinates may be implemented by the stitch boundary identifier 830 of FIG. 8. In some examples, the stitch boundary identifier 830 may be implemented by machine executable instructions such as that implemented by at least blocks 1005, 1010, 1015, 1020, 1025 of FIG. 10 executed by processor circuitry, which may be implemented by the example processor circuitry 1112 of FIG. 11, the example microprocessor 1200 of FIG. 12, and/or the example FPGA circuitry 1300 of FIG. 13. In other examples, the stitch boundary identifier 830 is implemented by other hardware logic circuitry, hardware implemented state machines, and/or any other combination of hardware, software, and/or firmware. For example, the stitch boundary identifier 830 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

In some examples, the apparatus includes means for identifying a stitch geometry based on a location of an object part area or the at least one keep-out zone. For example, the means for identifying a stitch geometry may be implemented by the geometry determiner 820 of FIG. 8. In some examples, the geometry determiner 820 may be implemented by machine executable instructions such as that implemented by at least block 910 of FIG. 9 executed by processor circuitry, which may be implemented by the example processor circuitry 1112 of FIG. 11, the example microprocessor 1200 of FIG. 12, and/or the example FPGA circuitry 1300 of FIG. 13. In other examples, the geometry determiner 820 is implemented by other hardware logic circuitry, hardware implemented state machines, and/or any other combination of hardware, software, and/or firmware. For example, the geometry determiner 820 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

In some examples, the apparatus includes means for load balance identification to adjust the first stitch coordinates to support laser load balancing. For example, the means for load balance identification may be implemented by the load balance identifier 835 of FIG. 8. In some examples, the load balance identifier 835 may be implemented by machine executable instructions such as that implemented by at least block 1020 of FIG. 10 executed by processor circuitry, which may be implemented by the example processor circuitry 1112 of FIG. 11, the example microprocessor 1200 of FIG. 12, and/or the example FPGA circuitry 1300 of FIG. 13. In other examples, the load balance identifier 835 is implemented by other hardware logic circuitry, hardware implemented state machines, and/or any other combination of hardware, software, and/or firmware. For example, the load balance identifier 835 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

While an example implementation of the stitch determiner 810 is illustrated in FIG. 8, one or more of the elements, processes and/or devices illustrated in FIG. 8 may be combined, divided, re-arranged, omitted, eliminated and/or implemented in any other way. Further, the example controller 815, the example geometry determiner 820, the example zone identifier 825, the example stitch boundary identifier 830, the example load balance identifier 835, the example test results analyzer 840, and/or, more generally, the example stitch determiner 810 of FIG. 8 may be implemented by hardware, software, firmware and/or any combination of hardware, software and/or firmware. Thus, for example, any of the example controller 815, the example geometry determiner 820, the example zone identifier 825, the example stitch boundary identifier 830, the example load balance identifier 835, the example test results analyzer 840, and/or, more generally, the example stitch determiner 810 of FIG. 8 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example controller 815, the example geometry determiner 820, the example zone identifier 825, the example stitch boundary identifier 830, the example load balance identifier 835, the example test results analyzer 840, and/or, more generally, the example stitch determiner 810 of FIG. 8 is/are hereby expressly defined to include a non-transitory computer readable storage device or storage disk such as a memory, a digital versatile disk (DVD), a compact disk (CD), a Blu-ray disk, etc. including the software and/or firmware. Further still, the example stitch determiner 810 may include one or more elements, processes and/or devices in addition to, or instead of, those illustrated in FIG. 8, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

Flowcharts representative of example hardware logic, machine readable instructions, hardware implemented state machines, and/or any combination thereof for implementing the stitch determiner 810 of FIG. 8 are shown in FIGS. 9-10. The machine readable instructions may be one or more executable programs or portion(s) of an executable program for execution by a computer processor such as the processor 1112 shown in the example processor platform 1100 discussed below in connection with FIG. 11. The program may be embodied in software stored on a non-transitory computer readable storage medium such as a CD-ROM, a floppy disk, a hard drive, a DVD, a Blu-ray disk, or a memory associated with the processor 1112, but the entire program and/or parts thereof could alternatively be executed by a device other than the processor 1112 and/or embodied in firmware or dedicated hardware. Further, although the example program is described with reference to the flowchart illustrated in FIGS. 9-10, many other methods of implementing the example stitch determiner 810 of FIG. 8 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein.

In another example, the machine readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 9-10 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

FIG. 9 illustrates a flowchart representative of example machine readable instructions 900 which may be executed to implement the example stitch determiner 810 of FIG. 8. In the example of FIG. 9, the stitch determiner 810 receives file input information (e.g., CAD-based generated file specifying the object to be fabricated using the printer 805) (block 905). In some examples, the stitch determiner 810 receives any other input provided by a user, as well as specific information related to the printer type, configuration, and/or other printer-related specifications (e.g., type of irradiation device used, laser speed, scan vector path, etc.). In some examples, the stitch determiner 810 identifies the part geometry based on the input data (e.g., using the geometry determiner 820) (block 910). In some examples, the stitch determiner 810 can optimize the stitching based on the part geometry (e.g., part symmetry, total number of layers needed, etc.). The zone identifier 825 identifies keep-out zones (e.g., based on high stress areas, smoke occlusion, etc.) to be avoided during stitching (block 915). In some examples, the zone identifier 825 determines the keep-out zones layer-by-layer based on the intended and/or planned sequence of the three-dimensional object build. In some examples, the zone identifier 825 determines the keep-out zones based on parts of the build (e.g., parts 315) that should be avoided when stitching (e.g., parts that should not have additional roughness, parts that are more sensitive to compression, parts where boundaries are to be avoided due to intended usage and/or application, etc.). The stitch boundary identifier 830 determines the optimal stitch boundary for a given sent of printing conditions and/or object geometries (block 920). In some examples, the stitch boundary identifier 830 determines the stitch boundary based on a comparison to the initial stitch length, as described in connect with FIG. 3 and FIG. 10. Once the optimal stitch boundary is identified, the controller 815 can be used to prompt the printer 805 to initiate the build (block 925). During the additive manufacturing process, the stitch determiner 810 can be used to monitor the formed stitch boundaries based on the ongoing build (block 930). For example, the test results analyzer 840 can be used to compare formed stitched to intended (e.g., optimized) stitched determined for a certain region and/or layer of the build. If the stitch boundaries continue to adhere to desired parameters (e.g., reduced length, load balancing, avoidance of keep-out zones, etc.), the build continues until it is completed (block 940). If any anomalies are identified during the build (e.g., reduced load balancing, stitch presence in keep-out zones, etc.), the stitch determiner 810 can determine that re-adjusting of the stitch boundaries is needed (block 935). As such, control can return to block 910, where the part geometry and/or region of current build (e.g., layer, etc.) can be re-evaluated using the geometry determiner 820 and the keep-out zones are re-confirmed, with further optimization or re-optimization of the stitch boundaries based on the updated data.

FIG. 10 illustrates a flowchart representative of example machine readable instructions 900 which may be executed to optimize a stitch boundary using the example stitch determiner 810 of FIG. 8. In the example of FIG. 10, the stitch boundary identifier 830 identifies an initial stitch (e.g., initial stitch 320 of FIG. 3, initial stitch 510 of FIG. 5, etc.) and evaluates the stitch to determine whether it meets designated criteria for optimization (block 1005). For example, the stitch boundary identifier 830 determines whether keep-out zones identified using the zone identifier 825 are breached (block 1010). For example, the stitch boundary identifier 830 can determine specific coordinates of keep-out zone areas and compare a given scan vector path of a laser (e.g., laser 615, 620) to the known keep-out zone locations. The stitch boundary identifier 830 determines whether the length of the stitch can be reduced further (e.g., increased stitch points to improve avoidance of keep-out zones) (block 1015). Furthermore, the stitch boundary identifier 830 can use the load balance identifier 835 to determine whether the laser workload is balanced (e.g., optimizing build efficiency). If any of these stitch optimization criteria are not satisfied, the stitch boundary identifier 830 can implement the algorithm described in connection with FIG. 3 to perform a local search (e.g., using the *LocalSearch()* function) to identify x- and y-coordinates in the neighborhood of the initial stitch that can optimize the stitch boundary, resulting in improved load balance, reduced stitch length, and avoidance of keep-out zones. Once the x- and y-coordinates are identified, the stitch boundary identifier 830 adjusts the coordinates of the stitch to determine whether an optimized stitch is obtained (block 1025). Once the stitch criteria and/or adjusted criteria (e.g., preference for load balancing over stitch length reduction, as indicated by a user) are met, the controller 815 proceeds with sending a request to the printer 805 to initiate and/or proceed with the build.

FIG. 11 is a block diagram of an example processing platform structured to execute the instructions of FIGS. 9-10 to implement the example stitch determiner of FIG. 8. The processor platform 1100 can be, for example, a server, a personal computer, a workstation, a self-learning machine (e.g., a neural network), or any other type of computing device. The processor platform 1100 of the illustrated example includes a processor 1112. The processor 1112 of the illustrated example is hardware. For example, the processor 1112 can be implemented by one or more integrated circuits, logic circuits, microprocessors, GPUs, DSPs, or controllers from any desired family or manufacturer. The hardware processor may be a semiconductor based (e.g., silicon based) device. In this example, the processor 1112 implements the controller 815, the example geometry determiner 820, the example zone identifier 825, the example stitch boundary identifier 830, the example load balance identifier 835, and/or the example test results analyzer 840.

The processor 1112 of the illustrated example includes a local memory 1113 (e.g., a cache). The processor 1112 of the illustrated example is in communication with a main memory including a volatile memory 1114 and a non-volatile memory 1116 via a bus 1118. The volatile memory 1114 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 1116 may be implemented by flash memory and/or any other desired type of memory device. Access to the main memory 1114, 1116 is controlled by a memory controller.

The processor platform 1100 of the illustrated example also includes an interface circuit 1120. The interface circuit 1120 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 1122 are connected to the interface circuit 1120. The input device(s) 1122 permit(s) a user to enter data and/or commands into the processor 1112. The input device(s) 1122 can be implemented by, for example, an audio sensor, a microphone, a camera (still or video), a keyboard, a button, a mouse, a touchscreen, a track-pad, a trackball, isopoint and/or a voice recognition system.

One or more output devices 1124 are also connected to the interface circuit 1120 of the illustrated example. The output devices 1124 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 1120 of the illustrated example, thus, typically includes a graphics driver card, a graphics driver chip and/or a graphics driver processor.

The interface circuit 1120 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1126. The communication can be via, for example, an Ethernet connection, a digital subscriber line (DSL) connection, a telephone line connection, a coaxial cable system, a satellite system, a line-of-site wireless system, a cellular telephone system, etc.

The processor platform 1100 of the illustrated example also includes one or more mass storage devices 1128 for storing software and/or data. Examples of such mass storage devices 1128 include floppy disk drives, hard drive disks, compact disk drives, Blu-ray disk drives, redundant array of independent disks (RAID) systems, and digital versatile disk (DVD) drives.

The machine executable instructions 1132 of FIGS. 9-10 may be stored in the mass storage device 1128, in the volatile memory 1114, in the non-volatile memory 1116, and/or on a removable non-transitory computer readable storage medium such as a CD or DVD

FIG. 12 is a block diagram of an example implementation of the processor circuitry 1112 of FIG. 11. In this example, the processor circuitry 1112 of FIG. 11 is implemented by a microprocessor 1200. For example, the microprocessor 1200 may implement multi-core hardware circuitry such as a CPU, a DSP, a GPU, an XPU, etc. Although it may include any number of example cores 1202 (e.g., 1 core), the microprocessor 1200 of this example is a multi-core semiconductor device including N cores. The cores 1202 of the microprocessor 1200 may operate independently or may cooperate to execute machine readable instructions. For example, machine code corresponding to a firmware program, an embedded software program, or a software program may be executed by one of the cores 1202 or may be executed by multiple ones of the cores 1202 at the same or different times. In some examples, the machine code corresponding to the firmware program, the embedded software program, or the software program is split into threads and executed in parallel by two or more of the cores 1202. The software program may correspond to a portion or all of the machine readable instructions and/or operations represented by the flowcharts of FIGS. 9-10.

The cores 1202 may communicate by an example bus 1204. In some examples, the bus 1204 may implement a communication bus to effectuate communication associated with one(s) of the cores 1202. For example, the bus 1204 may implement at least one of an Inter-Integrated Circuit (I2C) bus, a Serial Peripheral Interface (SPI) bus, a PCI bus, or a PCIe bus. Additionally or alternatively, the bus 1204 may implement any other type of computing or electrical bus. The cores 1202 may obtain data, instructions, and/or signals from one or more external devices by example interface circuitry 1206. The cores 1202 may output data, instructions, and/or signals to the one or more external devices by the interface circuitry 1206. Although the cores 1202 of this example include example local memory 1220 (e.g., Level 1 (LI) cache that may be split into an L1 data cache and an L1 instruction cache), the microprocessor 1200 also includes example shared memory 1210 that may be shared by the cores (e.g., Level 2 (L2_ cache)) for high-speed access to data and/or instructions. Data and/or instructions may be transferred (e.g., shared) by writing to and/or reading from the shared memory 1210. The local memory 1220 of each of the cores 1202 and the shared memory 1210 may be part of a hierarchy of storage devices including multiple levels of cache memory and the main memory (e.g., the main memory 1114, 1116 of FIG. 11). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1202 may be referred to as a CPU, DSP, GPU, etc., or any other type of hardware circuitry. Each core 1202 includes control unit circuitry 1214, arithmetic and logic (AL) circuitry (sometimes referred to as an ALU) 1216, a plurality of registers 1218, the L1 cache 1220, and an example bus 1222. Other structures may be present. For example, each core 1202 may include vector unit circuitry, single instruction multiple data (SIMD) unit circuitry, load/store unit (LSU) circuitry, branch/jump unit circuitry, floating-point unit (FPU) circuitry, etc. The control unit circuitry 1214 includes semiconductor-based circuits structured to control (e.g., coordinate) data movement within the corresponding core 1202. The AL circuitry 1216 includes semiconductor-based circuits structured to perform one or more mathematic and/or logic operations on the data within the corresponding core 1202. The AL circuitry 1216 of some examples performs integer based operations. In other examples, the AL circuitry 1216 also performs floating point operations. In yet other examples, the AL circuitry 1216 may include first AL circuitry that performs integer based operations and second AL circuitry that performs floating point operations. In some examples, the AL circuitry 1216 may be referred to as an Arithmetic Logic Unit (ALU). The registers 1218 are semiconductor-based structures to store data and/or instructions such as results of one or more of the operations performed by the AL circuitry 1216 of the corresponding core 1202. For example, the registers 1218 may include vector register(s), SIMD register(s), general purpose register(s), flag register(s), segment register(s), machine specific register(s), instruction pointer register(s), control register(s), debug register(s), memory management register(s), machine check register(s), etc. The registers 1218 may be arranged in a bank as shown in FIG. 12. Alternatively, the registers 1218 may be organized in any other arrangement, format, or structure including distributed throughout the core 1202 to shorten access time. The bus 1222 may implement at least one of an I2C bus, a SPI bus, a PCI bus, or a PCIe bus.

Each core 1202 and/or, more generally, the microprocessor 1200 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1200 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 13 is a block diagram of another example implementation of the processor circuitry 1112 of FIG. 11. In this example, the processor circuitry 1112 is implemented by FPGA circuitry 1300. The FPGA circuitry 1300 can be used, for example, to perform operations that could otherwise be performed by the example microprocessor 1200 of FIG. 12 executing corresponding machine readable instructions. However, once configured, the FPGA circuitry 1300 instantiates the machine readable instructions in hardware and, thus, can often execute the operations faster than they could be performed by a general purpose microprocessor executing the corresponding software.

More specifically, in contrast to the microprocessor 1200 of FIG. 12 described above (which is a general purpose device that may be programmed to execute some or all of the machine readable instructions represented by the flowcharts of FIGS. 9-10 but whose interconnections and logic circuitry are fixed once fabricated), the FPGA circuitry 1300 of the example of FIG. 13 includes interconnections and logic circuitry that may be configured and/or interconnected in different ways after fabrication to instantiate, for example, some or all of the machine readable instructions represented by the flowcharts of FIGS. 9-10. In particular, the FPGA circuitry 1300 may be thought of as an array of logic gates, interconnections, and switches. The switches can be programmed to change how the logic gates are interconnected by the interconnections, effectively forming one or more dedicated logic circuits (unless and until the FPGA circuitry 1300 is reprogrammed). The configured logic circuits enable the logic gates to cooperate in different ways to perform different operations on data received by input circuitry. Those operations may correspond to some or all of the software represented by the flowcharts of FIGS. 9-10. As such, the FPGA circuitry 1300 may be structured to effectively instantiate some or all of the machine readable instructions of the flowcharts of FIGS. 9-10 as dedicated logic circuits to perform the operations corresponding to those software instructions in a dedicated manner analogous to an ASIC. Therefore, the FPGA circuitry 1300 may perform the operations corresponding to the some or all of the machine readable instructions of FIGS. 9-10 faster than the general purpose microprocessor can execute the same.

In the example of FIG. 13, the FPGA circuitry 1300 is structured to be programmed (and/or reprogrammed one or more times) by an end user by a hardware description language (HDL) such as Verilog. The FPGA circuitry 1300 of FIG. 13, includes example input/output (I/O) circuitry 1302 to obtain and/or output data to/from example configuration circuitry 1304 and/or external hardware (e.g., external hardware circuitry) 1306. For example, the configuration circuitry 1304 may implement interface circuitry that may obtain machine readable instructions to configure the FPGA circuitry 1300, or portion(s) thereof. In some such examples, the configuration circuitry 1304 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 1306 may implement the microprocessor 1200 of FIG. 12. The FPGA circuitry 1300 also includes an array of example logic gate circuitry 1308, a plurality of example configurable interconnections 1310, and example storage circuitry 1312. The logic gate circuitry 1308 and interconnections 1310 are configurable to instantiate one or more operations that may correspond to at least some of the machine readable instructions of FIGS. 9-10 and/or other desired operations. The logic gate circuitry 1308 shown in FIG. 13 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1308 to enable configuration of the electrical structures and/or the logic gates to form circuits to perform desired operations. The logic gate circuitry 1308 may include other electrical structures such as look-up tables (LUTs), registers (e.g., flip-flops or latches), multiplexers, etc.

The interconnections 1310 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1308 to program desired logic circuits.

The storage circuitry 1312 of the illustrated example is structured to store result(s) of the one or more of the operations performed by corresponding logic gates. The storage circuitry 1312 may be implemented by registers or the like. In the illustrated example, the storage circuitry 1312 is distributed amongst the logic gate circuitry 1308 to facilitate access and increase execution speed.

The example FPGA circuitry 1300 of FIG. 13 also includes example Dedicated Operations Circuitry 1314. In this example, the Dedicated Operations Circuitry 1314 includes special purpose circuitry 1316 that may be invoked to implement commonly used functions to avoid the need to program those functions in the field. Examples of such special purpose circuitry 1316 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1300 may also include example general purpose programmable circuitry 1318 such as an example CPU 1320 and/or an example DSP 1322. Other general purpose programmable circuitry 1318 may additionally or alternatively be present such as a GPU, an XPU, etc., that can be programmed to perform other operations.

Although FIGS. 12 and 13 illustrate two example implementations of the processor circuitry 1112 of FIG. 11, many other approaches are contemplated. For example, as mentioned above, modern FPGA circuitry may include an on-board CPU, such as one or more of the example CPU 1320 of FIG. 13. Therefore, the processor circuitry 1112 of FIG. 11 may additionally be implemented by combining the example microprocessor 1200 of FIG. 12 and the example FPGA circuitry 1300 of FIG. 13. In some such hybrid examples, a first portion of the machine readable instructions represented by the flowcharts of FIGS. 9-10 may be executed by one or more of the cores 1202 of FIG. 12 and a second portion of the machine readable instructions represented by the flowchart of FIGS. 9-10 may be executed by the FPGA circuitry 1300 of FIG. 13.

In some examples, the processor circuitry 1112 of FIG. 11 may be in one or more packages. For example, the microprocessor 1200 of FIG. 12 and/or the FPGA circuitry 1300 of FIG. 13 may be in one or more packages. In some examples, an XPU may be implemented by the processor circuitry 1112 of FIG. 11, which may be in one or more packages. For example, the XPU may include a CPU in one package, a DSP in another package, a GPU in yet another package, and an FPGA in still yet another package.

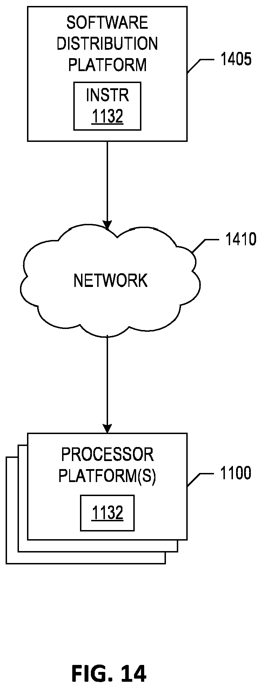

A block diagram illustrating an example software distribution platform 1405 to distribute software such as the example machine readable instructions 1132 of FIG. 11 to hardware devices owned and/or operated by third parties is illustrated in FIG. 14. The example software distribution platform 1405 may be implemented by any computer server, data facility, cloud service, etc., capable of storing and transmitting software to other computing devices. The third parties may be customers of the entity owning and/or operating the software distribution platform 1405. For example, the entity that owns and/or operates the software distribution platform 1405 may be a developer, a seller, and/or a licensor of software such as the example machine readable instructions 1132 of FIG. 11. The third parties may be consumers, users, retailers, OEMs, etc., who purchase and/or license the software for use and/or re-sale and/or sub-licensing. In the illustrated example, the software distribution platform 1405 includes one or more servers and one or more storage devices. The storage devices store the machine readable instructions 1132, which may correspond to the example machine readable instructions of FIGS. 9-10, as described above. The one or more servers of the example software distribution platform 1405 are in communication with a network 1410, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1132 from the software distribution platform 1405. For example, the software, which may correspond to the example machine readable instructions of FIGS. 9-10, may be downloaded to the example processor platform 1100, which is to execute the machine readable instructions 1132 to implement the stitch determiner 810 of FIG. 8. In some example, one or more servers of the software distribution platform 1405 periodically offer, transmit, and/or force updates to the software (e.g., the example machine readable instructions 1132 of FIG. 11) to ensure improvements, patches, updates, etc., are distributed and applied to the software at the end user devices. While in the example of FIG. 14 a software distribution platform is used for distribution of the example machine readable instructions 1132 to hardware devices owned and/or operated by third parties, the example machine readable instructions 1132 of FIG. 11 may be implemented in any other manner (e.g., through the use of a web service permitting users to submit proposed designs for stitch planning, allowing the stitch planning functionality to remain local).

From the foregoing, it will be appreciated that methods and apparatus described herein permit implementation of an optimization-based technique to control the stitch boundary quality in multi-laser additive machines (e.g., large-scale format additive machines). In the examples disclosed herein, a multi-segment stitch boundary drives the stitch out of a given part area and ensures non-overlap with keep-out zones. As such, large parts requiring multiple irradiation devices (e.g., lasers, fixed and/or moving configurations, etc.) can be printed while controlling the location of any stitching artifacts. Additionally, superior part quality is achieved by minimizing the stitch length while avoiding no-go zones (e.g., part areas and/or keep-out zones), thereby reducing weak links in the build part. In the examples disclosed herein, load balancing of the laser workload permits reduced throughput for builds of 3D objects requiring multiple lasers working in parallel. In the examples disclosed herein, an algorithm is developed that can be implemented to evaluate a given stitch line with respect to load balancing, stitch length and/or avoidance of keep-out zones. In the examples disclosed herein, such an algorithm can further be used to performs a search for a better solution (e.g., optimized stitch boundary) in the neighborhood of the existing stitch, where the neighborhood can correspond to modification of x- and y- coordinates of a set of points along the stitch boundary based on a local search, the local search a function of part geometry and stitching region parameters.

Example methods, apparatus, systems, and articles of manufacture to optimize stitch quality in additive manufacturing are disclosed herein. Further examples and combinations thereof include the following:

Example 1 includes an apparatus comprising at least one memory to store instructions, and processor circuitry to execute the instructions to identify at least one keep-out zone of an object build area in which stitching is to be reduced during additive manufacturing, determine a first set of stitch coordinates corresponding to a stitching region of the object, the stitching region including a stitch boundary of the stitching region, and generate a second set of stitch coordinates reducing stitching in the at least one keep-out zone of the object build area, the second set of stitch coordinates determined using (1) a local search algorithm and/or (2) a random coordinate modification algorithm, the second set of stitch coordinates to reduce stitch length or support load balancing.

Example 2 includes the apparatus of any preceding clause, wherein the local search algorithm includes a local search for x- and y-coordinates as a function of part geometry or stitching region parameters.

Example 3 includes the apparatus of any preceding clause, wherein the random coordinate modification algorithm includes random modification of an x-coordinate or a y-coordinate of a set of points along the stitch boundary.

Example 4 includes the apparatus of any preceding clause, wherein the processor circuitry is to identify the first set of stitch coordinates based on a laser assignment to the object build area.

Example 5 includes the apparatus of any preceding clause, wherein the laser assignment includes a scan vector overlap of a first laser and a second laser at the stitch boundary.

Example 6 includes the apparatus of any preceding clause, wherein the processor circuitry is to identify a stitch geometry based on a location of an object part area or the at least one keep-out zone.

Example 7 includes the apparatus of any preceding clause, wherein the processor circuitry is to identify the at least one keep-out zone based on location of a high stress area of an object part to be additively manufactured.

Example 8 includes the apparatus of any preceding clause, wherein the processor circuitry is to identify the at least one keep-out zone based on a printer setting of a printer selected for the additive manufacturing or a material property of a material selected for the object build area.

Example 9 includes the apparatus of any preceding clause, wherein the processor circuitry is to adjust the first set of stitch coordinates to support laser load balancing.

Example 10 includes a method comprising identifying at least one keep-out zone of an object build area in which stitching is to be reduced during additive manufacturing, determining a first set of stitch coordinates corresponding to a stitching region of the object, the stitching region including a stitch boundary of the stitching region, and generating a second set of stitch coordinates reducing stitching in the at least one keep-out zone of the object build area, the second set of stitch coordinates determined by using (1) a local search algorithm and/or (2) a random coordinate modification algorithm, the second set of stitch coordinates to reduce stitch length or support load balancing.

Example 11 includes the method of any preceding clause, wherein the local search algorithm includes a local search for x- and y-coordinates as a function of part geometry or stitching region parameters.

Example 12 includes the method of any preceding clause, wherein the random coordinate modification algorithm includes random modification of an x-coordinate or a y-coordinate of a set of points along the stitch boundary.

Example 13 includes the method of any preceding clause, further including identifying the first set of stitch coordinates based on a laser assignment to the object build area.

Example 14 includes the method of any preceding clause, wherein the laser assignment includes a scan vector overlap of a first laser and a second laser at the stitch boundary.

Example 15 includes the method of any preceding clause, further including identifying a stitch geometry based on a location of an object part area or the at least one keep-out zone.

Example 16 includes the method of any preceding clause, further including identifying the at least one keep-out zone based on location of a high stress area of an object part to be additively manufactured.

Example 17 includes the method of any preceding clause, further including identifying the at least one keep-out zone based on a printer setting of a printer selected for the additive manufacturing or a material property of a material selected for the object build area.

Example 18 includes the method of any preceding clause, further including adjusting the first set of stitch coordinates to support laser load balancing.

Example 19 includes at least one computer readable storage medium comprising instructions that, when executed, cause at least one processor to at least identify at least one keep-out zone of an object build area in which stitching is to be reduced during additive manufacturing, determine a first set of stitch coordinates corresponding to a stitching region of the object, the stitching region including a stitch boundary of the stitching region, and generate a second set of stitch coordinates reducing stitching in the at least one keep-out zone of the object build area, the second set of stitch coordinates determined by using (1) a local search algorithm and/or (2) a random coordinate modification algorithm, the second set of stitch coordinates used to reduce stitch length or support load balancing.

Example 20 includes the at least one computer readable storage medium as defined in any preceding clause, wherein the computer readable instructions, when executed, cause the at least one processor to identify the first set of stitch coordinates based on a laser assignment to the object build area.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. An apparatus comprising:
at least one memory to store instructions; and
processor circuitry (1112) to execute the instructions to:
identify at least one keep-out zone (310) of an object (210) build area in which stitching is to be reduced during additive manufacturing;
determine a first set of stitch coordinates (302, 303) corresponding to a stitching region (215) of the object (210), the stitching region (215) including a stitch boundary of the stitching region (215); and
generate a second set of stitch coordinates (302, 303) reducing stitching in the at least one keep-out zone (310) of the object (210) build area, the second set of stitch coordinates (302, 303) determined using at least one of (1) a local search algorithm or (2) a random coordinate modification algorithm, the second set of stitch coordinates (302, 303) to reduce stitch length or support load balancing.

2. The apparatus of claim 1, wherein the local search algorithm includes a local search for x- and y-coordinates (302, 303) as a function of part geometry or stitching region (215) parameters.

3. The apparatus of claim 1, wherein the random coordinate modification algorithm includes random modification of an x-coordinate or a y-coordinate of a set of points (410, 415, 420) along the stitch boundary.

4. The apparatus of claim 1, wherein the processor circuitry (1112) is to identify the first set of stitch coordinates (302, 303) based on a laser (105A, 105B) assignment to the object (210) build area.

5. The apparatus of claim 4, wherein the laser (105A, 105B) assignment includes a scan vector overlap of a first laser (105A) and a second laser (105B) at the stitch boundary.

6. The apparatus of claim 1, wherein the processor circuitry (1112) is to identify a stitch geometry based on a location of an object (210) part area or the at least one keep-out zone (310).

7. The apparatus of claim 1, wherein the processor circuitry (1112) is to identify the at least one keep-out zone (310) based on location of a high stress area of an object (210) part to be additively manufactured.

8. The apparatus of claim 1, wherein the processor circuitry (1112) is to identify the at least one keep-out zone (310) based on a printer setting of a printer (805) selected for the additive manufacturing or a material property of the material selected for the object (210) build area.

9. The apparatus of claim 1, wherein the processor circuitry (1112) is to adjust the first stitch coordinates (302, 303) to support laser (105A, 105B) load balancing.

10. A method comprising:
identifying at least one keep-out zone (310) of an object (210) build area in which stitching is to be reduced during additive manufacturing;
determining a first set of stitch coordinates (302, 303) corresponding to a stitching region (215) of the object (210), the stitching region (215) including a stitch boundary of the stitching region (215); and
generating a second set of stitch coordinates (302, 303) reducing stitching in the at least one keep-out zone (310) of the object (210) build area, the second set of stitch coordinates (302, 303) determined by using at least one of (1) a local search algorithm or (2) a random coordinate modification algorithm, the second set of stitch coordinates (302, 303) to reduce stitch length or support load balancing.

11. The method of claim 10, wherein the local search algorithm includes a local search for x- and y-coordinates (302, 303) as a function of part geometry or stitching region (215) parameters.

12. The method of claim 10, wherein the random coordinate modification algorithm includes random modification of an x-coordinate or a y-coordinate of a set of points (410, 415, 420) along the stitch boundary.

13. The method of claim 10, further including identifying the first set of stitch coordinates (302, 303) based on a laser (105A, 105B) assignment to the object (210) build area.

14. The method of claim 13, wherein the laser (105A, 105) assignment includes a scan vector overlap of a first laser (105A) and a second laser (105B) at the stitch boundary.

15. The method of claim 10, further including identifying a stitch geometry based on a location of an object (210) part area or the at least one keep-out zone (310).
